# EUROPEAN PATENT SPECIFICATION

(11) **EP 4 455 526 B1**
(45) Date of publication and mention of the grant of the patent: **26.11.2025**
(21) Application number: 23170727.4
(22) Date of filing: 28.04.2023
(51) Int. Cl.: F16L 3/233, F16L 3/24

(54) **CABLE BINDER FOR VEHICLES, CABLE-BINDING ASSEMBLY, AND VEHICLE LAMP WITH THE ASSEMBLY**
KABELBINDER FÜR FAHRZEUGE, KABELBINDERANORDNUNG UND FAHRZEUGLAMPE MIT DER ANORDNUNG
DISPOSITIF DE LIAISON DE CÂBLE POUR VÉHICULES, ENSEMBLE DE LIAISON DE CÂBLE ET LAMPE DE VÉHICULE AVEC L'ENSEMBLE

(43) Date of publication of application: 30.10.2024
(73) Proprietor: Hella Autotechnik Nova, s.r.o., 78985 Mohelnice (CZ)
(72) Inventor: Winkler, Dusan, 78985 Mohelnice (CZ); Tinkl, Pavel, 78901 Zabreh na Morave (CZ); Suchy, Jan, 78972 Dubicko (CZ); Smolik, Matej, 70030 Ostrava Hrabuvka (CZ); Galek, Tomas, 78344 Namest na Hane (CZ); Bures, Zdenek, 78342 Slatinice (CZ); Besta, Petr, 78325 Bouzov (CZ)
(74) Representative: Behr-Wenning, Gregor

(56) References cited:
- US-A- 3 550 219
- US-A- 5 759 004
- US-A1- 2015 097 089
- US-A1- 2020 041 044

## Description

### Technical field

The present invention relates to cable binders for fixing cables connecting electrical components inside of vehicles. It especially relates to cable binders for use in vehicle lamps, such as headlamps or taillamps.

### Background of the Invention

In the state of the art, cable binders are used in automotive industry for securing bundles of cables, e.g., for powering headlight components or infotainment devices. The binders keep the cables at a desired position and keep them still during travel, which helps preventing damage of the cables by scraping or chafing them against their surroundings. Unsecured cables could be damaged as they repeatedly and over a long time move or vibrate while in contact with e.g., an edge of an adjacent vehicle component. This can lead to a necessity for replacing the cables or even a whole component, such as a headlight, once the cables become too damaged for a safe operation.

Standard cable binders known in the art use a zip tie bands for holding the cables tightly together. The zip tie can then be fixed to the vehicle by any means, e.g., by gluing, welding or by the zip tie itself or another zip tie. In automobile lamps, a known way of fixing the zip tie binders inside of the lamp is to provide them with a body, usually made from one piece of material with the zip tie. The body has a cylindrical opening, and the lamp casing is provided with a cylindrical metallic pin onto which the opening can be mounted.

A shortcoming of this solution is that the binder is not fixed to the pin securely enough, it can move on the pin, often even rotate around it. The plastic body can thus be scraped by the metal pin and can become more and more loose on the pin. The bound cables can still move around to some extent and can thus also be damaged. Another shortcoming is that the binder can be mounted onto the pin in many orientations. The cables can thus by fixed in a different place or leading in a different direction than what was intended by design engineers. This can again lead to more damage to the cables.

Documents US2020041044 A1, US3550219A1, US20150097089A1 and US5759004A1 disclose cable binders with a two-part mounting protrusion. There is a gap between the two parts to enable their elastic deformation during mounting into an opening. A disadvantage of these cable binders is that they can be mounted incorrectly, or they can even freely rotate in the opening.

It would therefore be desirable to come up with an improved cable binder solution which would remove or limit at least some of the problems of the known binders.

### Summary of the Invention

The shortcomings of the solutions known in the prior art are to some extent eliminated by cable binder for vehicles, the binder comprising a body for attachment to the vehicle and a strip for binding cables. The strip is fixed to the body, e.g., the binder can be from a single piece of material. The binder further comprises a securing mechanism for closing a part of the binder into a loop around the cables which are intended to be bound. The body comprises a mounting protrusion for insertion into an opening in a wall of the component, wherein the mounting protrusion comprises a poka-yoke element for engaging with a complementary poka-yoke element in the vehicle's opening. The poka-yoke element of the mounting protrusion comprises a poka-yoke protrusion and/or a poka-yoke recess.

The mounting protrusion has a fixed end, which is attached to the body, a free end for insertion into the opening, and a tapered section adjacent to the free end. Length of the mounting protrusion is measured in the direction between the free end and the fixed end, which is also a mounting direction or inserting direction of the binder. The tapered section is tapered such that it gets narrower towards the free end, i.e., is wider or broader at the fixed end. The tapered section is delimited by a back surface for bracing against the wall of the component when the mounting protrusion is inserted into the opening, wherein the back surface is offset from the free end. In other words, the tapered section begins at the free end and ends at the back surface, where the mounting protrusion can get narrower relatively abruptly, e.g., the back surface can be perpendicular to the protrusion's length, and the back surface can thus serve as a barrier preventing backward movement of the mounting protrusion out of the opening by bracing against the wall, where the opening is located. The tapered section is thus shaped such that it facilitates insertion into the opening and obstructs extraction out of the opening.

A section of the mounting protrusion extending from the back surface towards the fixed end is narrower than the tapered section at its end adjacent to the back surface. This narrower section can be narrower than the opening for which the binder is intended. It can thus fit inside of the opening and the wider back surface prevents pulling the binder out of the opening. The mounting protrusion further comprises a slit dividing the mounting protrusion into at least two mounting protrusion parts along at least part of the mounting protrusion's length. The mounting protrusion parts can then be flexible such that they can be moved closer together across the slit when pressed from the sides, which occurs during insertion into an appropriately sized opening, and when the force is released, e.g., after the tapered portion is completely through the opening, the mounting protrusion parts elastically move back to their original positions. The back surface can thus pass through the opening when the mounting protrusion parts are pushed closer together (e.g., by inner wall of the opening during insertion thanks to the tapered section), but after they are released, with no force pushing the parts together even when the binder is pulled back, the back surface cannot pass through the opening, at least not without a destructive amount of force.

The cable binder is provided such that the mounting protrusion on the body is mountable into the opening of the vehicle in only one orientation of the body with respect to the opening. This can especially be ensured by the poka-yoke elements. The elements can be shaped such that the mounting protrusion is insertable into the opening only if the poka-yoke recess (on the mounting protrusion or on the opening's wall) is aligned with the poka-yoke protrusion (on the opening's wall or on the mounting protrusion), wherein there is only one position when this alignment and subsequent insertion is possible.

When viewed in the mounting direction, the tapered section can thus be larger than the opening for which the binder is intended, such that the mounting protrusion parts need to be pushed closer together during the insertion. In other words, an elastic deformation of the mounting protrusion parts occurs during insertion. When the insertion is done, the deformation is reversed, i.e., the mounting protrusion returns to its original non-deformed shape. The back surface is oriented such that pulling the binder back does not cause the elastic deformation, i.e., the protrusion is not tapered in the opposite direction. The binder is thus caught inside of the opening.

The mounting protrusion can also be from one piece of material with the body. It can for example have substantially cylindrical or conical shape, for example with diameter from 5 to 20 mm and length from 15 to 40 mm. Different shapes are however also possible, e.g., a square shape or non-regular shape. The mounting protrusion parts can be made such that the opening can be smaller than the mounting protrusion when viewed in the insertion direction such that the parts are elastically deformed during the insertion.

The poka-yoke element of the mounting protrusion comprises a poka-yoke protrusion and/or a recess. The opening for mounting of the binder thus contains complementary poka-yoke recess and/or poka-yoke protrusion for cooperating with the element of the binder in order to prevent at least some incorrect mounting orientations, e.g., to prevent rotation around the mounting protrusion's axis.

The wall in which an entrance/exit to/from the opening is located can be a part of any component which can be a part of a vehicle, can be from any material, have any thickness etc.

The strip can be made of plastic and its thickness can be chosen such that it is flexible enough to be closable into the loop while being strong enough to hold the cables secured over a long time, e.g., many years during a whole lifetime of a headlight. In can however be also made e.g., from metal, leather etc. The body can for example be a block of material provided with the mounting protrusion for attaching it to the vehicle, e.g., to an automobile lamp's casing. When the loop is closed and tightened, the length of the strip which is a part of the loop might depend on the number of cables and their shape and diameter. The exact shape and size of the loop can depend on materials used, on properties of the cables, on features of the securing mechanism etc. The loop can be entirely formed by the strip, or it can be partially formed by the body.

Poke-yoke basically means that the element, or more precisely the two cooperating elements (one on the mounting protrusion, one in the opening), can ensure mounting of the binder to the vehicle in one or more predetermined correct positions while incorrect positions are prevented. For example, only a single orientation of the binder with respect to the vehicle can be correct, and the mounting of the binder is then preferably possible in only this one orientation. The bound cables can then be guided in position and orientation intended by the designer, regardless of skill, experience or attention of the workers providing the mounting. The poka-yoke elements can especially be two interlocking elements, such as a poka-yoke protrusion and a complementarily shaped recess, which can engage with each other when oriented correctly, and which make mounting less possible (e.g., requiring a suspicious or unnatural amount of destructive strength by an assembly line worker) when oriented incorrectly. The mounting protrusion can thus by asymmetrical, i.e., does not have a rotational shape. For example, it can be a cylinder or a cone with a single poka-yoke protrusion or recess providing for the asymmetry + with the tapered section and the mounting protrusion parts, which can but do not have to be symmetrical. Rotation of the body around the opening is thus prevented by the element together with the incorrect mounting, which also helps stability of the cables and makes sure they stay in position intended by the designer.

The advantage of the present invention is thus in that it simplifies mounting of the binder to the automobile by blocking at least some incorrect positions. The cables can then be more reliably guided in the automobile in places intended by designers of the respective vehicle part, e.g., of a lamp, and they have less tendency to move over time. Damage done to the binder or opening by them scraping against each other can also be reduced by the invention since they can move with respect to each other less than with the use of solutions known from the state of the art. The binder can also be mounted into vehicles which were not adapted for binder-mounting during their manufacture. E.g., a simple hole can be drilled in a vehicle component, provided with a poka-yoke recess and the binder can be mounted therein.

The securing mechanism can be a zip tie mechanism. This mechanism, also called cable tie, can be made unopenable, i.e., requiring destruction (e.g., snipping of the stripe) if the cables need to be unbound. It can also be made openable such that the loop can be opened and then closed again. Other securing mechanisms, such as utilizing Velcro or magnetic connections, can also be used.

The cable binder can be made of a plastic material containing a glass filler. PA66 with glass fibers can be used, as an example of a suitable material. A different filler, e.g., carbon fibers, is also possible.

The poka-yoke element on the mounting protrusion can be divided into at least two parts by the slit. This element can especially by a poka-yoke protrusion. Especially when there are two mounting protrusion parts in total, this can help keeping each of them in the correct position, e.g., it can prevent individual movement of one of the parts which would be without the poka-yoke element.

When viewed in direction parallel to the length of the mounting protrusion, an outer perimeter of the tapered section can form at least a part of a circle. Circular shape can be advantageous due to more balanced load distribution.

The slit can extend along the whole length of the mounting protrusion. Preferably it extends at least along the whole length of the tapered section. This length has an impact on the flexibility of the parts, and thus also on the ease of mounting of the binder.

The back surface can be perpendicular to the insertion direction of the mounting protrusion into the opening. Such a back surface blocks the backwards movement of the binder while having a relatively large contact area with the wall. The wall can standardly be also perpendicular to the mounting direction. It is however also possible to make the back surface differently oriented, as long as it can brace against the wall. E.g., it should not be significantly tapered in the backwards direction which would make it possible to pull the tapered portion back through the opening with the force from pulling elastically deforming the mounting portion parts in the same way as happens during insertion.

The strip can comprise at least one groove for fitting at least part of a perimeter of a cable, wherein the groove extends across the whole width of the strip and is placed on the side of the strip meant for contacting the cables. It is also possible to place the groove more generally on the section of the binder which can be closed into the loop around the cables which are to be bound. The section comprises at least a part of the strip, it can also comprise a part of the body, e.g., the body's wall to which the strip is attached.

For example, the groove can have a round shape, with a cross section substantially in the shape of a half circle, such that it can fit (a half of) a round cable. The groove extends across the width of the section and is placed on the inner side of the loop when the section is closed into the loop. The groove can therefore come into contact with at least some of the bound cables and can guide the cables. The width of the section can be the width of the strip, of the wall of the body forming part of the loop etc. It is possible to provide at least one groove on the body and at least one groove on the strip. These grooves can then be on different sides of the inner side of the loop when closed, e.g., even opposite to each other, and the cables can thus by guided by the grooves on multiple sides of the cable bundle.

The section, which closes into the loop, can comprise at least two parallel ridges protruding from the strip and/or the body, wherein the groove is between two adjacent ridges. These ridges thus extend in the direction of the width of the strip, along the desired direction of cables in the loop. The ridges preferably have blunt edges to prevent cable damage. A groove can also be partially formed next to a ridge, e.g., when the strip is bent such that it forms the other side of the groove when the loop is closed. If more than two ridges are provided, more than one groove can be formed between them.

Cables bound by the loop run through the loop substantially in the direction of the width of the strip, and the grooves help keeping them straight, parallel to each other. As a result, the cables can be held more securely, and the loop is less likely to become loose during use. Such a loosening could e.g., occur if the cables were bound twisted with each other, so they would not run through the loop perpendicularly to the loop's cross section. Long term vibration due to the vehicle's operation can then shake the cables such that they become more aligned with each other, and the bundle of cables thus takes up less space. The loop is then too loose for the cables, doesn't hold them tightly enough, and the cables can move around more freely, can became damaged by scraping against their surroundings, can make noise etc. Providing the loop with the grooves in the present invention helps preventing this situation - the cables are tightened in a more orderly and more mutually aligned fashion, the bundle of cables is more secured, and the negative effects of loose cables are limited.

The body can comprise two ribs for squeezing cables, wherein the ribs are inside of the loop when the binder is closed into a loop around the cables and both ribs extend along the inner perimeter of the loop perpendicularly to the direction of cables bound by the loop. If the groove as described above is a part of the binder, the ribs are thus perpendicular to the groove.

In general, at least one rib can be placed on a section of the binder which forms the loop, which can especially be a part of the strip and a part (e.g., one wall to which the strip is connected) of the body. In other words, the rib can also be on the strip. Placement of the rib on the body can however be more advantageous because the rib is then more rigid and can squeeze the cables more securely. The rib is thus inside of the loop so it can contact the cables. The rib can for example by raised with respect to its surroundings by 0.1-3 mm, e.g., 0.2-2 mm, depending, among other factors, on number of cables, their diameter, material of their sheaths etc. The rib(s) can locally increase pressure on the cables by the loop, which can help securing the cables in place and prevent their shifting through the loop / shifting the loop along the cables.

Using two parallel ribs, as described above, can however be more advantageous. The cables can then be squeezed at two places, with a less tight portion in between, which limits movement of the cables in either direction through the loop.

The at least one rib can be on the body. For example, the body can contain the rib(s) while the strip contains the grooves. The at least one rib can be inside of the loop when the binder is closed into a loop around the cables. The rib(s) can then extend along the inner perimeter of the loop perpendicularly to the direction of cables bound by the loop.

The use of the tapered mounting protrusion parts, together with the poka-yoke elements, keeps the binder in a desired position, as described above. Combining these features with the at least one groove, whether placed on the strip and/or on the body, then keeps the cables steady inside of the loop, especially when also combined with the at least one rib (either on the strip and/or on the body). These combined features thus provide significant increase in the stability of cables in the vehicle.

The strip optionally comprises an anti-slip structure placed on the side of the strip for contacting the cables. A protruding or recessed pattern can for example be used on the strip. The pattern is preferably chosen such that it does not scrape or otherwise damage the cables while it keeps them from moving in the loop.

Each mounting protrusion part can have such a cross section, when sectioned by a plane parallel to the insertion direction of the mounting protrusion into the opening, that the cross section has a first arm, which is parallel with the insertion direction, and a second arm, which is angled by an acute angle relative to the first arm. The tapered section as a whole can thus basically have a shape of an arrow. This section plane can be the same for all the mounting protrusion parts or different parts can have different planes with this property. Only a single plane with this property can exist for a mounting protrusion part, or there can be multiple such plane, even a substantially infinite number. The cross section of the mounting protrusion part(s) can be substantially constant along part of the protrusion's perimeter.

The strip of the cable binder according to the invention can be attached to the body via a connection portion, which is a part of the body. The portion can comprise two branches, with a space in between, which are both connected to the body on one side and to the strip on their other side. Using such a connecting portion can provide the strip-body connection with some flexibility so the strip is much less likely to be broken off and the connecting portion can be bent to some extent when the loop is closed, which helps with tightly securing the cables. Thanks to the branching, the flexibility can be provided while the portion is wide enough to hold the cables along a larger portion of their length, which helps preventing breaking / sharply bending the cables at the binder. The connecting portion can alternatively or additionally be curved such that the loop, when closed, is formed next to the body. A wall of the body can then be a part of the loop and the bundle of cables can be guided close to the surface to which the body is attached.

The shortcomings of the solutions known in the state of the art are also to some extent eliminated by a cable-binding assembly for vehicles comprising a component for a vehicle, wherein the component comprises an opening. The assembly further comprises the cable binder according to the invention, wherein the opening comprises a poka-yoke element for engaging with the poka-yoke element of the binder when the body of the binder is mounted by the mounting protrusion into the opening.

The back surface can be parallel with a surface of the body to which the mounting protrusion is attached, wherein their distance is equal to thickness of the wall containing the opening. There can be a slight clearance between the wall and the surfaces, e.g., in order to account for manufacturing tolerances. The wall is thus caught between the surfaces and binder is attached to the component with little or no space for movement.

The shortcomings of the solutions known in the state of the art are also to some extent eliminated by a vehicle lamp, e.g., an automobile lamp, which comprises the assembly.

### Description of drawings

A summary of the invention is further described by means of exemplary embodiments thereof, which are described with reference to the accompanying drawings, in which:
- Fig 1.: Schematically shows a perspective view of an example of cable binder according to the invention;
- Fig 2.: Schematically shows a detail of the body of the binder from fig. 1, wherein a mounting protrusion with a poka-yoke element in the form of a poka-yoke protrusion and a slit dividing the mounting protrusion into two halves can be seen, as well as a branched connecting portion;
- Fig 3.: Schematically shows a sideview of the binder from fig. 1;
- Fig 4.: Schematically shows a detail of the body from fig. 3;
- Fig 5.: Schematically shows a front view of the binder from fig. 1;
- Fig 6.: Schematically shows a perspective view of the binder from figs. 1 to 5 mounted into an opening in a wall of a vehicle component;
- Fig 7.: Schematically shows a cross section view of an embodiment of an opening in a vehicle component, where the opening is a cavity in a protruding part of the component;
- Fig 8.: Schematically shows a cross section A-A of the protruding part from fig. 7;
- Fig 9.: Schematically shows an alternative embodiment of the opening, where the opening is a through hole in a wall of a vehicle component;
- Fig 10.: Schematically shows a sectional view of an exemplary mounting of the binder from fig. 1 into a through hole opening, wherein the thickness of the wall containing the opening is such that the wall located between the body and a back surface of a tapered section of the mounting protrusion;
- Fig 11.: Schematically shows a sideview of a loop created by the binder around two cables;
- Fig 12.: Schematically shows a detailed view of a connecting portion of the body, having two branches, two ribs and a groove for guiding cables.
- Fig 13.: Schematically shows a perspective view of the protruding part from figs. 7 and 8;
- Fig 14.: Schematically shows a cross section of an alternative embodiment of a protruding part which has three sections;
- Fig 15.: Schematically shows a perspective view of the protruding part from fig. 14;

### Exemplary Embodiments of the Invention

The invention will be further described by means of exemplary embodiments with reference to the respective drawings.

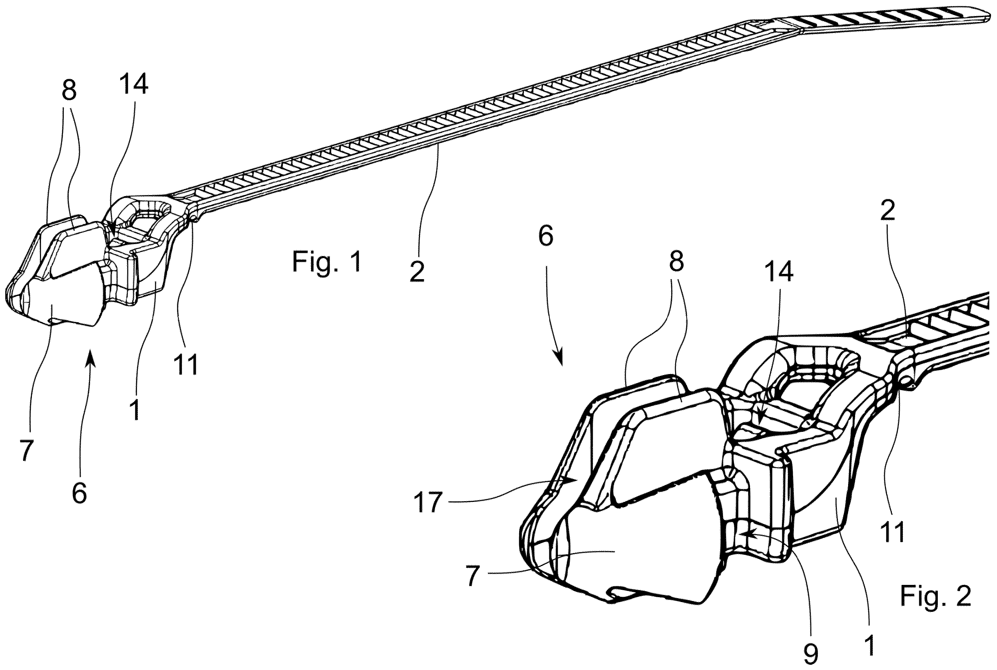

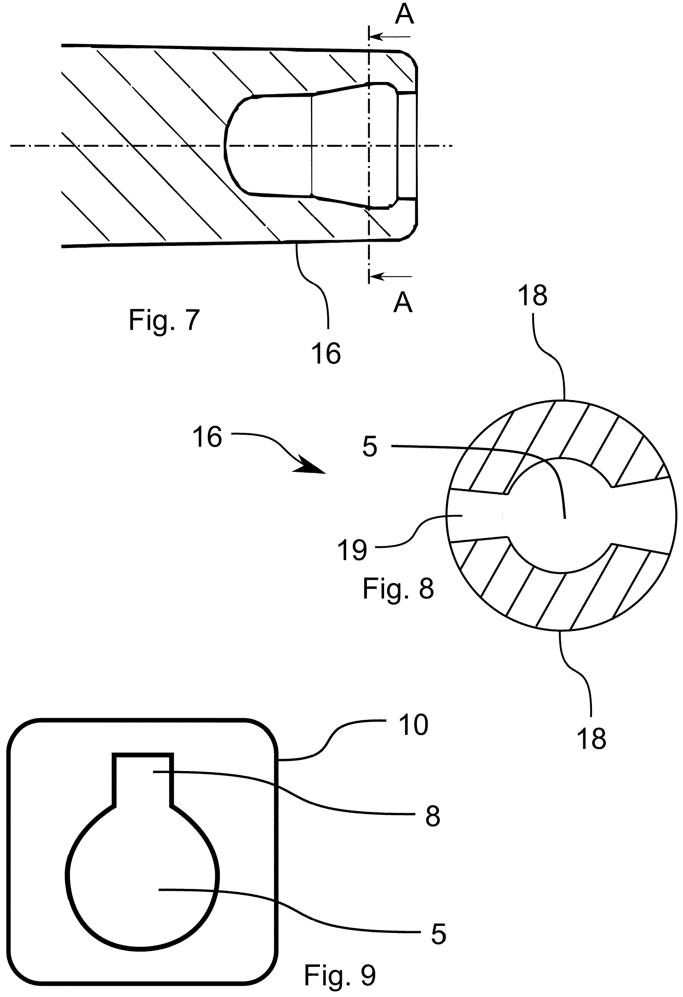

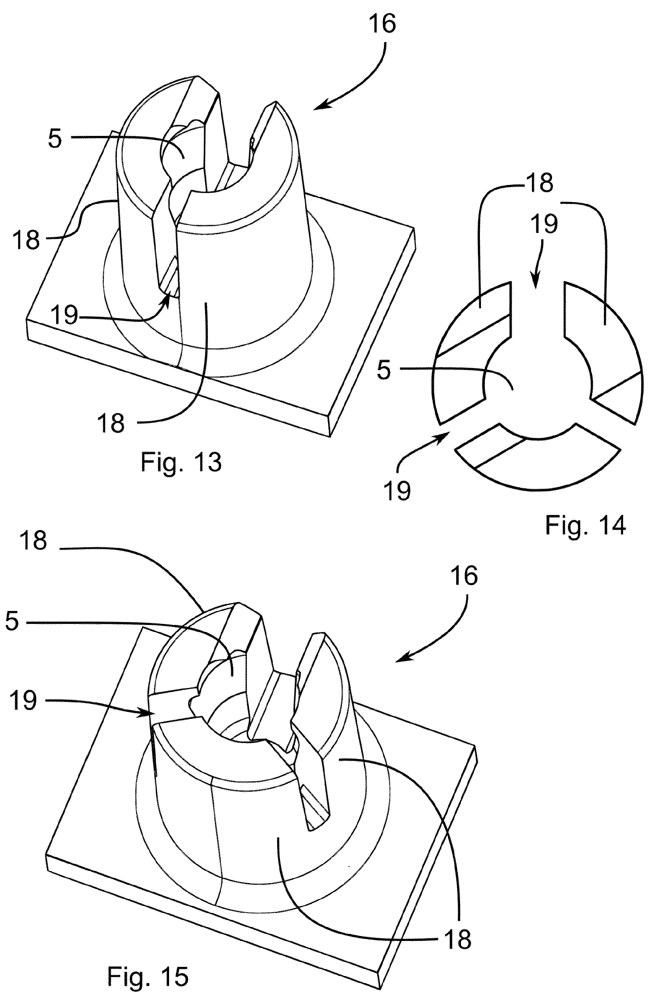

An exemplary embodiment of the cable binder according to the invention is depicted in figs. 1 to 6 and 9, and an alternative embodiment of an opening 5 for attachment of the binder to a vehicle component is depicted in figs. 7 to 8. Fig. 13 then shows a detail of the binder in use, with two cables 3 squeezed by a rib 12 and guided by grooves 11; the binder in this figure is simplified, the details shown can however be a part of the embodiment from figs. 1-6.

The cable binder comprises a body 1 and a flexible strip 2, preferably made from one piece of material, e.g., plastic with addition of glass filler, such as glass fiber. A different filler, e.g., carbon fibers, can also be used. The body 1 serves for fixing the binder to an opening 5 provided in a vehicle, and the strip 2 serves for holding the cables 3, which are to be bound by the binder, tightly together, and fixes them to the body 1 and therefore to the vehicle.

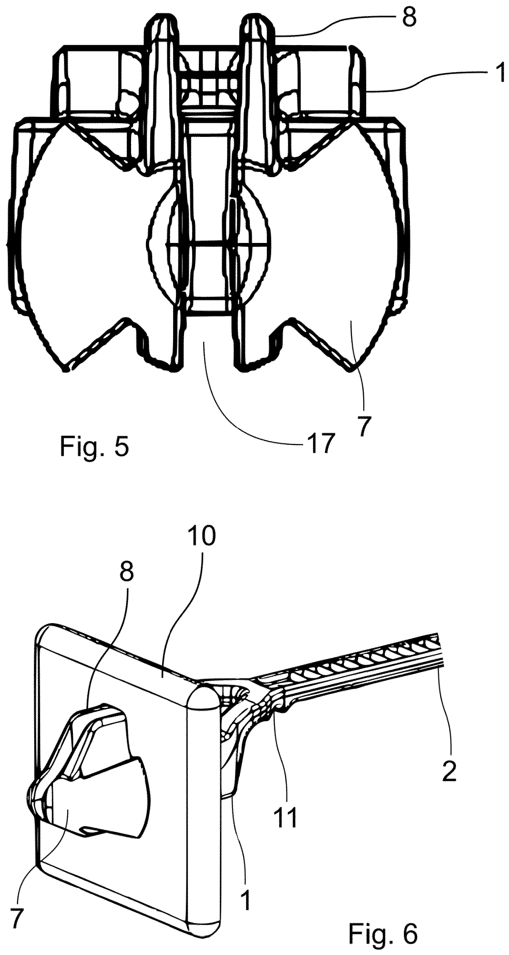

In order to secure the cables 3, the binder comprises a securing mechanism that can be used to make a loop 4 from the strip 2 around the cables 3 and to hold the loop 4 closed. Part of the loop 4 can also be formed from the body 1 (see fig. 13). In the depicted embodiments, the mechanism is a zip tie mechanism. That is, the body 1 comprises a through hole 14 for the strip 2, the strip 2 comprises a ratchet - a line of teeth (see e.g., fig. 1 or 6), and the through hole 14 comprises a pawl 15 for engaging with the ratchet. The free end of the strip 2 can thus by pushed through the through hole 14, with the pawl 15 and teeth being shaped such that they do not prevent movement in this one direction, but it cannot be pulled back - the pawl 15 prevents that by engaging the teeth. Therefore, once the cables 3 are placed next to the body 1 on the strip 2 and the loop 4 is created around them, it can only be tightened, it cannot standardly be loosened or opened without destroying the strip 2. It is however also possible to provide a releasable zip tie securing mechanism where the pawl 15 can be disengaged from the ratchet.

A different kind of closure, which can be both a kind that cannot be opened without destruction or a kind that can be opened and closed repeatedly, can also be used. For example, a hook-and-loop fastener, magnetic fastener, buckle-type fastener, a row of snap fasteners on the strip 2 with at least one complementary snap fastener one the body 1, on the other side of the strip 2 etc., a fastener with an adhesive, or other type of fastener can be used.

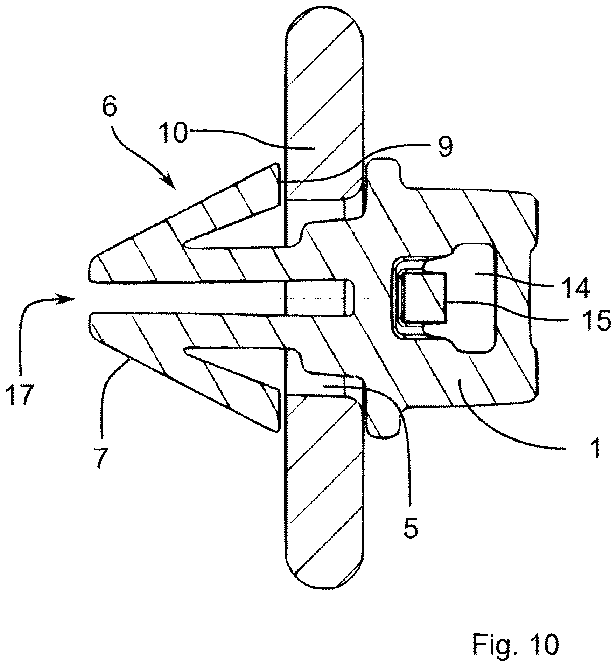

Fixing or mounting of the body 1 to the opening 5 is accomplished by a mounting protrusion 6 attached to the body 1, preferably made from a single piece of material with the body 1. This mounting protrusion 6 can be inserted into the opening 5 and comprises two ends - a fixed end, which is the end attached to the body 1, and a free end, which is the opposite end, which is meant to be inserted into the opening 5. The direction from the fixed end towards the free end is the mounting direction or insertion direction, i.e., the direction of movement of the mounting protrusion 6 into the opening 5. Length of the protrusion is measured in this direction. The mounting protrusion 6 comprises a tapered section 7 which extends between the free end and a back surface 9, wherein it is narrower at the free end and wider at the back surface 9. Between the back surface 9 and the body 1 lies the rest of the mounting protrusion 6, wherein this rest of it is narrower than the tapered section 7 at its widest, i.e., adjacent to the back surface 9, as can be seen in fig. 10.

The tapered section 7 is tapered in order to facilitate insertion into the opening 5. At its narrowest, it is thus narrower than the opening 5. At its widest, it is wider, at least in some direction, than the opening 5, such that during insertion, the tapered section 7 is being elastically deformed. After insertion of the tapered section 7 through the whole opening 5, the elastic deformation is returned to the initial state and the back surface 9 prevents pulling the binder out of the opening 5. The back surface 9 is thus preferably substantially perpendicular to the insertion direction, such that it can brace against the wall 10 around the opening 5 with a relatively large surface area. The elastic deformation of the tapered section 7 is possible, at least in part, thanks to a slit 17 dividing the section into two mounting protrusion parts along the length of the mounting protrusion 6. The mounting protrusion parts can be bent closer together, across the slit 17, and thus facilitate the insertion despite the tapered section 7 being partially wider than the opening 5. The slit 17 can extend along the whole length of the mounting protrusion 6, i.e., it can extend up to the body 1. It can however also be longer, extending partially also into the body 1. On the other hand, it can also be shorter. Preferably however, it extends at least through the whole length of the tapered section 7.

The elastic deformation can additionally be facilitated by deformation of the mounting protrusion parts themselves. In the depicted embodiments, each mounting protrusion part has cross section having a first arm, which is parallel with the insertion direction, and a second arm, which is angled by an acute angle relative to the first arm in order to ensure the tapering of the section. This can also be seen in fig. 10. The arms can thus be bent with respect to each other to some extent, more precisely the second arm can be bent towards the first arm and towards the slit 17. In this embodiment, the elastic deformation of the tapered section 7 is thus provided by bending the whole mounting protrusion part and also bending its second arm. The back surface 9 is then provided at the free end of the second arm. As a result, the cross section of the mounting protrusion 6 is arrow-shaped, with the arrow pointing in the insertion direction.

In alternative embodiments, the slit 17 can divide the mounting protrusion 6 into more than two parts, e.g., into three parts. The slit 17 is thus branched. The parts can then have all the same size and can be bent towards the protrusion's central axis during the insertion.

In the depicted embodiment, the tapered section 7, at least on its front side facing away from the body 1, has a partially conical shape. Its cross section is thus a part of a circle, which can be seen in fig. 5 which shows a front view of the binder. Circular shape can be advantageous due to uniform load distribution. The back side of the tapered section 7 can also be conical, as can be seen in fig. 10, such that the second harm has a substantially constant thickness. It is however possible to have for example a pyramidically shaped tapered section 7, a tapered section 7 with a constant cross section, e.g., a V-shaped cross section, etc. The constant cross section, especially along the slit 17 in one of radial directions of the protrusion, can be suitable e.g., for rectangular openings 5.

On the mounting protrusion 6, there is a poka-yoke element 8 for cooperating with a complementary poka-yoke element 8 in the opening 5 (see e.g., fig. 6 and 9). The elements make sure that the binder can be mounted into the opening 5 in correct orientations only, e.g., to ensure that the bound cables 3 extend in expected directions and are thus not bent inadequately, forced against a surface which might damage their sheaths etc. These elements only allow the mounting protrusion 6 to be inserted into the opening 5 in a single orientation. Mounting in other orientation is preferably impossible or possible only with exertion of a large amount of force by the person doing the mounting such that an accidental incorrect mounting is made very unlikely. In the depicted embodiment, the poka-yoke element 8 of the body 1 is a poka-yoke protrusion on the mounting protrusion 6 extending along the mounting protrusion's 6 length. The opening 5 then has a recessed part which enables insertion of the poka-yoke protrusion. Since only one poka-yoke protrusion and recess is provided, the mounting protrusion 6 and the opening 5 are not symmetrical around any rotational axis, i.e., they are not shaped merely as solids of revolution such as cylinders or cones ,and mounting them together rotated around their axes is also prevented, unless it is a rotation by a number of full turns.

Any other shape, orientation, arrangement etc. of the poka-yoke elements 8 can be used in alternative embodiments. Any such elements which ensure the poka-yoke principle for mounting of the binder into the opening 5 can be used. For example, the mounting protrusion 6 can comprise a poka-yoke recess and the opening 5 can comprise a poka-yoke protrusion which are arranged for locking together in the correct orientation and for preventing mounting in other orientations. It is also possible to provide multiple poka-yoke elements 8 on the mounting protrusion 6 and/or in the opening 5, as long as they ensure the correct mounting. If the application of the binder allows for multiple correct orientations, the poka-yoke elements 8 can be adapted for allowing these multiple orientations and preventing other orientations.

The opening 5 for mounting of the mounting protrusion 6 can be realized in two main ways - as a through hole in a wall 10 of a vehicle component, e.g., a wall 10 from 2 to 5 mm thick (see fig. 9) or as a cavity, especially in a protruding part 16 placed on the wall 10 of the vehicle component (see fig. 7). The binder as described above can be used for both these main ways, with the attachment into a through hole being preferable. When the opening 5 is a through hole, the thickness of the wall 10 with the opening 5 and/or the distance between the body 1 and the back surface 9 are chosen such that the wall 10 is located between the back surface 9 and the surface of the body 1, from which the strip 2 extends. There can be a slight tolerance in those distances - there can be a clearance between the wall 10 and the back surface 9 and/or the body 1. The back surface 9 and/or the body 1 can also be slightly elastically deformed by the insertion of the wall 10 between them and they can thus clamp the wall 10 - push against it.

When the opening 5 is a cavity, the whole tapered section 7 is located in the cavity after insertion. The entrance into the cavity is narrower than the central part of the cavity and thus the entrance serves for attaching the mounting protrusion 6 in the same way as the through hole opening 5 does. The wall of the entrance can thus be considered the wall 11 with a through hole opening 5, and the embodiment with the cavity can thus be a special case of the general through hole opening 5. The cavity can be created inside of a protruding part 16 of the vehicle component. E.g., a cylindrical or conical protruding part 16 can be provided, with the cavity placed coaxially inside. The protruding part 16 is then preferably split into multiple pieces along its length. Two protruding part 16 pieces 18 are provided in the embodiment shown in fig. 8 - each of the hatched areas in this figure is one piece. The pieces are separated from each other by a protruding part slit 19 along preferably most of the cavity's length. The protruding part pieces 18 can thus be at least slightly elastically deformed during the inserting. The mounting protrusion 6 is thus held in the cavity not only be the back surface 9 braced against the wall 10 around the entrance but can also be clamped between the pieces of the protruding part 16. For example, the protruding part pieces 18 can push from the sides, i.e., substantially perpendicularly to the mounting direction, on the widest part of the tapered section 7. The protruding part slit 19 in the protruding part 16 can also serve as a poka-yoke element 8. In the depicted embodiment, the slit is narrower at one of its ends and broader at the other end (on the right side in fig. 8 and on the upper side in the perspective view in fig. 13) such that the poka-yoke element 8 with poka-yoke protrusion of the mounting protrusion 6 can only fit into the broader end. A single correct orientation in which the insertion is possible is thus ensured.

In other embodiments, there can be for example three protruding part pieces 18 forming the protruding part 16. The protruding part slit 19 is then branched, and also can have a wider branch, which can serve as a poka-yoke recess. Such an embodiment is shown in figs. 14 and 15. In other embodiments, the cavity can have an elliptical or rectangular cross section, with the mounting protrusion 6 having complementary shape.

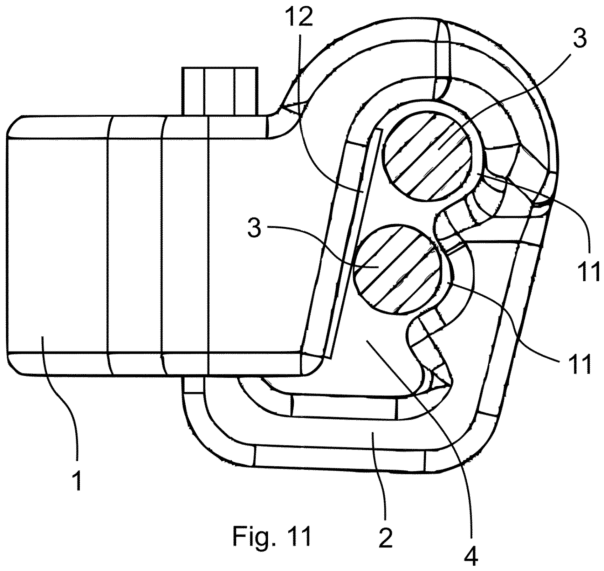

There can be a groove 11 provided on the strip 2, on the side which is in contact with cables 3 during use. The groove 11 extends through the whole width of the strip 2 and is sized such that at least one cable 3 can at least partially fit into the groove 11. That is, the cross-section of the groove 11 is such that a cable 3 can be guided by the groove 11, as can be seen in fig. 11. The groove 11 can be a recessed part of the strip 2, however, more preferably, it is formed between two parallel protruding ridges. In the depicted embodiment, there is one groove 11 formed between two ridges and another formed between a ridge and a bent portion of the strip 2. In different embodiments, there can be any number of grooves 11 and ridges provided for guiding one or more cables 3. In some embodiments, a groove 11 can have a cross section such that multiple cables 3 can fit into the groove 11.

The grooves 11 can be placed on a part of the strip 2 sufficiently close to the body 1, e.g., on a first third of the length of the strip 2, or even on a first tenth of the length etc. Depending on the number of cables 3 to be bound and their diameters, the groove 11 closest to the body 1 can e.g., be less than 2 cm from the body 1. The binder can be for example made from a plastic material, e.g., containing a filler, such as glass fibers. The body 1 is preferably made from one piece of material together with the strip 2, e.g., by injection molding. A suitable material can for example be polyamide or nylon 66, preferably with the glass filler. The strip 2 can be provided with an anti-slip structure 13 on its side meant for contact with the cables 3. This structure can for example be a mesh or grooving provided on the strip 2 surface. The structure can increase the roughness of the surface and thus limit slipping of the cables 3 along the strip 2 or through the loop 4. The structure can also be made from a different material, e.g., silicone or rubber.

In the depicted embodiment, the body 1 of the binder further comprises a rib 12 for squeezing the cables 3 bound by the binder, wherein the rib 12 is perpendicular to the cables 3. The rib 12 is thus placed on a part of the binder which is in (or intended for) contact with the cables 3, e.g., on the inner side of the loop 4 when the loop 4 is closed and tightened around the cables 3. In the embodiment shown in fig. 13, there are two parallel ribs 12 provided and they are placed on the body 1. In other embodiments, the rib(s) 12 can however be at least partially placed on the strip 2, e.g., after the last ridge or groove 11 in the direction towards the free end of the strip 2. In embodiments where the ribs 12 are placed on the same part of the length of the strip 2 as the ridges, the ribs 12 are preferably interrupted at the ridges such that the ridge itself has the same height along its whole length, not locally increased by the rib(s) 12. In some embodiments, more than two ribs 12 can be used.

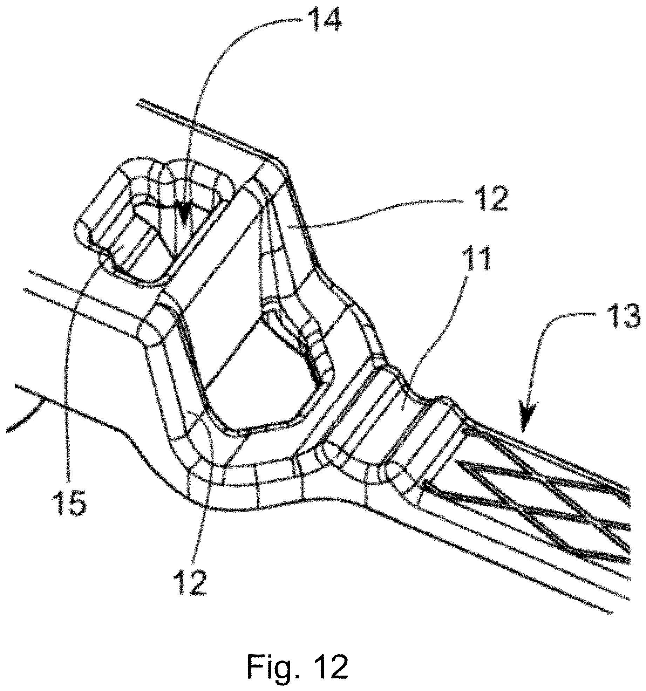

The rib(s) 12 can have a width which is larger than the width of the grooves 11, such that they squeeze the cables 3 on a larger portion of the cables' 3 length and thus do not damage them. For example, the width of each rib 12 can be at least two or at least three times as large as the diameter of cables 3 which are expected to be bound by the binder. Preferably, there are two ribs 12 on the body 1 and they are as far from each other as possible by the body's 1 width. In embodiments with the branched connecting portion, as described in more detail below and as shown in fig. 12, the ribs 12 can have substantially the same width as the branches, e.g., the same width ± 25 %, and be substantially aligned with them. This ensures a sufficient contact area with the cables 3 while the two ribs 12 are still separated by a large enough gap for holding the cables 3. The height of the rib(s) 12 can for example be from 0.1 to 3 mm, depending on the number of cables 3 to be bound, diameter of the cables 3, material of their sheath(s), intended placement of the binder etc. The width of the ribs 12 is measured in direction perpendicular to the plane of fig. 11, their height is the smaller dimension measurable in fig. 11, i.e., the one measured on the rib 12 in direction towards the grooves 11 and ridges. Length of the ribs 12 would then be the longer dimension visible in fig. 11, along the surface from which the ribs 12 protrude. Fig. 2 then shows the branched of the connecting portion, so the arrangement of the two parallel ribs 12 can be inferred from this figure, even though the ribs 12 themselves are not easily discernible there. Each rib 12 can basically be an extended portion of the respective branch, protruding from the body 1 towards the inside of the loop 4.

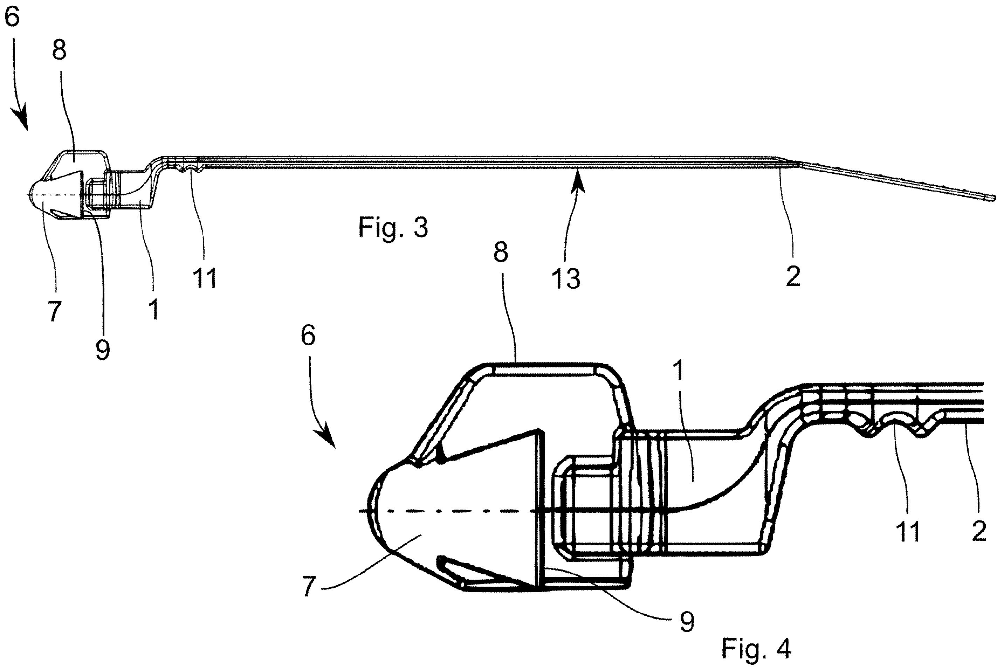

The strip 2 can be attached to the body 1 via a connecting portion of the body 1 comprising a hole for increasing flexibility of the point of attachment. The connecting portion can thus have two branches which are at one end firmly connected to the body 1 and at the other and are joined together and connected firmly to the strip 2 (see especially fig. 2). The size of the hole can be such that the strip 2 cannot be inserted therein, in order to prevent insertion of the strip 2 into incorrect place when mounting the binder and binding cables 3 with it. The connecting portion, whether it is branched or not, can also be bent such that the loop 4, when being closed around a bundle of cables 3, is placed next to the body 1, i.e., substantially at the same height as the body 1, when viewed from the side. Such a shape of the connecting portion, when the strip 2 is straight before closing the loop 4, can be seen e.g., in figs. 2 or 4. This curved/bent shape can help guiding the bound cables 3 closer to the surface of the vehicle to which the body 1 is attached. This can help with saving space in the vehicle, e.g., inside of a lamp, and can help preventing damage to the cables 3. In other words, when the loop 4 is closed around some cables 3 and the binder is viewed in the direction along these cables 3 (e.g., the sideview from fig. 11), most of the loop 4 is preferably located next to the body 1, i.e., less than half of the volume taken by the loop 4 extends vertically (i.e., up and/or down) beyond the body 1. The volume can be the inner volume of the loop 4, e.g., as can be seen in fig. 11, where the loop 4 extends above/beyond the body 1 approximately only by the thickness of the strip 2, with the space inside of the loop 4 being substantially the same height as the body 1.

The ribs 12 and/or the grooves 11 or the ridges forming the grooves 11 preferably have blunted edges, at least on places that can come into contact with cables 3. The groove(s) 11 or some of them can be placed on the body 1, i.e., the grooves 11 do not necessarily have to be on the strip 2. In such embodiments, the grooves 11 on the body 1 extend across the width of the body 1, i.e., in the same direction as they would on the strip 2, such that the cables 3 bound by the binder can be guided by the groove(s) 11, preferably in a substantially straight line. Generally, the grooves 11 are placed on the section of the binder, which is closable into the loop 4, and at least some of the grooves 11 are inside of the loop 4 and can come into contact with the cables 3. This section of the binder preferably comprises a part of the body 1 as well as at least part of the strip 2 (as is depicted in fig. 11). In some embodiments, the strip 2 can however form the loop 4 by itself, e.g., when the securing mechanism is entirely placed on the strip 2. Example of such a mechanism can be a hook-and-loop fastener, with the hook portion on one side of the strip 2 and the loop portion on the other side. This section of the binder can also generally comprise the rib(s) 12, which can be placed on a different part of the section, e.g., on the opposite part of the loop 4 such that the cables 3 are forced towards the groove(s) 11 by the rib(s) 12.

In an alternative embodiment, the connecting portion is shaped such that the loop 4 is oriented perpendicularly with respect to the shown embodiment. The cables 3 bound by the loop 4 can then extend in parallel with the mounting protrusion 6, e.g., above it. The loop 4 forming section in this embodiment can be provided with the groove(s) 11 and/or rib(s) 12, as described above, e.g., placed on the strip 2 or on the connecting portion.

The cable binder, as described above, can be a part of a cable-binding assembly which comprises the binder and also a vehicle component with an opening 5 placed on the vehicle component, through a wall 10 of the component. The component can be fixed inside of a vehicle, e.g., to an inner part of a dashboard, of a lamp etc. The vehicle component with the opening 5 can for example be a lamp frame, part of interior lining, part of central console or dashboard etc. The component can comprise the protruding part 16 with the cavity for fixing the binder. In such an embodiment, the component is preferably plastic, as is the binder. As another example, the component can be a metallic sheet, e.g., a part of an aluminium heat sink. The opening 5 can then be a through hole through the sheet. As another example, the component can be a wall, e.g., a plastic wall, of a lamp, dashboard etc.

The assembly can be a part of a vehicle lamp, e.g., an automobile headlight, rear combination lamp, car body lighting, position line light, fog light, etc. For example, the component with the opening 5 can be an integral part of a lamp frame, and the binder can then hold cables 3 for powering various lamp modules.

### List of reference numbers

- 1: - Body
- 2 -: Strip
- 3 -: Cable
- 4 -: Loop
- 5 -: Opening
- 6 -: Mounting protrusion
- 7 -: Tapered section
- 8 -: Poka-yoke element
- 9 -: Back surface
- 10 -: Wall
- 11 -: Groove
- 12 -: Rib
- 13 -: Anti-slip structure
- 14 -: Through hole
- 15 -: Pawl
- 16 -: Protruding part
- 17 -: Slit
- 18 -: Protruding part piece
- 19 -: Protruding part slit

## Claims

1. Cable binder for a vehicle component, the binder comprising a body (1) for attachment to the vehicle and a strip (2) for binding cables (3) which is fixed to the body (1), wherein the binder further comprises a securing mechanism for closing a part of the binder into a loop (4) around the cables (3), wherein
the body (1) comprises a mounting protrusion (6) for insertion into an opening (5) in a wall (10) of the component,
wherein the mounting protrusion (6) comprises a poka-yoke element (8) for engaging with a complementary poka-yoke element (8) in the vehicle's opening (5), wherein the poka-yoke element (8) of the mounting protrusion (6) comprises a poka-yoke protrusion and/or a recess,
wherein the mounting protrusion (6) has a fixed end, which is attached to the body (1), a free end for insertion into the opening (5), and a tapered section (7) adjacent to the free end,
wherein the tapered section (7) gets narrower towards the free end and is delimited by a back surface (9) for bracing against the wall (10) of the component when the mounting protrusion (6) is inserted through the opening (5), wherein the back surface (9) is offset from the free end,
wherein a section of the mounting protrusion (6) extending from the back surface (9) towards the fixed end is narrower than the tapered section (7) at its end adjacent to the back surface (9),
wherein the mounting protrusion (6) further comprises a slit (17) dividing the mounting protrusion (6) into at least two mounting protrusion parts along at least part of the mounting protrusion's (6) length,
**characterized in that** the mounting protrusion (6) is mountable into the opening (5) in only one orientation of the body (1) with respect to the opening (5).

2. The cable binder according to claim 1 **wherein** the binder is made of a plastic material containing a glass filler.

3. The cable binder according to any of the preceding claims **wherein** the securing mechanism is a zip tie mechanism.

4. The cable binder according to any of the preceding claims **wherein** the poka-yoke element (8) on the mounting protrusion (6) is divided into at least two parts by the slit (17).

5. The cable binder according to any of the preceding claims **wherein** when viewed in direction parallel to the length of the mounting protrusion (6), an outer perimeter of the tapered section (7) forms at least a part of a circle.

6. The cable binder according to any of the preceding claims **wherein** the slit (17) extends along the whole length of the mounting protrusion (6).

7. The cable binder according to any of the preceding claims **wherein** the back surface (9) is perpendicular to the insertion direction of the mounting protrusion (6) into the opening (5).

8. The cable binder according to any of the preceding claims **wherein** the strip (2) comprises at least one groove (11) for fitting at least part of a perimeter of a cable (3), wherein the groove (11) extends across the whole width of the strip (2) and is placed on the side of the strip (2) meant for contacting the cables (3).

9. The cable binder according to any of the preceding claims **wherein** the body (1) comprises two ribs (12) for squeezing cables (3), wherein the ribs (12) are inside of the loop (4) when the binder is closed into a loop (4) around the cables (3) and both ribs (12) extend along the inner perimeter of the loop (4) perpendicularly to the direction of cables (3) bound by the loop (4).

10. The cable binder according to any of the preceding claims **wherein** the strip (2) comprises an anti-slip structure (13) placed on the side of the strip (2) meant for contacting the cables (3).

11. The cable binder according to any of the preceding claims **wherein** each mounting protrusion part has a cross section when sectioned by a plane parallel to the insertion direction of the mounting protrusion (6) into the opening (5), the cross section having a first arm, which is parallel with the insertion direction, and a second arm, which is angled by an acute angle relative to the first arm.

12. Cable-binding assembly for vehicles comprising a component for a vehicle, wherein the component comprises a wall (10) with an opening (5), **characterized in that** the assembly further comprises the cable binder according to any of the preceding claims, wherein the opening (5) comprises a poka-yoke element (8) for engaging with the poka-yoke element (8) of the binder when the body (1) of the binder is mounted by the mounting protrusion (6) into the opening (5).

13. The cable-binding assembly according to claim 12 **wherein** the back surface (9) is parallel with a surface of the body (1) to which the mounting protrusion (6) is attached, wherein their distance is equal to thickness of the wall (10) containing the opening (5).

14. Vehicle lamp **characterized in that** it comprises the assembly according to any one of claims 12 or 13.

## Patentansprüche

1. Kabelbinder für eine Fahrzeugkomponente, wobei der Binder einen Körper (1) zur Anbringung an dem Fahrzeug und einen an dem Körper (1) befestigten Streifen (2) zum Binden von Kabeln (3) umfasst, wobei der Binder ferner einen Sicherungsmechanismus zum Schließen eines Teils des Binders zu einer Schleife (4) um die Kabel (3) umfasst, wobei
der Körper (1) einen Befestigungsvorsprung (6) zum Einsetzen in eine Öffnung (5) in einer Wand (10) der Komponente umfasst,
wobei der Befestigungsvorsprung (6) ein Poka-Yoke-Element (8) zum Eingreifen mit einem ergänzenden Poka-Yoke-Element (8) in der Öffnung (5) des Fahrzeugs umfasst, wobei das Poka-Yoke-Element (8) des Befestigungsvorsprungs (6) einen Poka-Yoke-Vorsprung und/oder eine Ausnehmung umfasst,
wobei der Befestigungsvorsprung (6) ein befestigtes Ende, das an dem Körper (1) angebracht ist, ein freies Ende zum Einsetzen in die Öffnung (5) und einen dem freien Ende benachbarten konischen Abschnitt (7) aufweist,
wobei der konische Abschnitt (7) in Richtung des freien Endes schmaler wird und durch eine Rückseite (9) zur Abstützung gegen die Wand (10) der Komponente begrenzt ist, wenn der Befestigungsvorsprung (6) durch die Öffnung (5) eingesetzt ist, wobei die Rückseite (9) von dem freien Ende versetzt ist,
wobei ein sich von der Rückseite (9) in Richtung des befestigten Endes erstreckender Abschnitt des Befestigungsvorsprungs (6) schmaler als der verjüngte Abschnitt (7) an seinem der Rückseite (9) benachbarten Ende ist,
wobei der Befestigungsvorsprung (6) ferner einen Schlitz (17), der den Befestigungsvorsprung (6) in mindestens zwei Befestigungsvorsprungsteile entlang mindestens eines Teils der Länge des Befestigungsvorsprungs (6) teilt, umfasst,
**dadurch gekennzeichnet, dass** der Befestigungsvorsprung (6) in der Öffnung (5) in nur einer Ausrichtung des Körpers (1) in Bezug auf die Öffnung (5) montierbar ist.

2. Kabelbinder nach Anspruch 1, **wobei** der Binder aus einem einen Glasfüllstoff enthaltenden Kunststoffmaterial hergestellt ist.

3. Kabelbinder nach einem der vorhergehenden Ansprüche, **wobei** der Sicherungsmechanismus ein Verschluss- und Bindemechanismus ist.

4. Kabelbinder nach einem der vorhergehenden Ansprüche, **wobei** das Poka-Yoke-Element (8) an dem Befestigungsvorsprung (6) durch den Schlitz (17) in mindestens zwei Teile geteilt ist.

5. Kabelbinder nach einem der vorhergehenden Ansprüche, **wobei** bei Betrachtung in einer Richtung parallel zur Länge des Befestigungsvorsprungs (6) ein Außenumfang des verjüngten Abschnitts (7) mindestens einen Teil eines Kreises bildet.

6. Kabelbinder nach einem der vorhergehenden Ansprüche, **wobei** sich der Schlitz (17) entlang der gesamten Länge des Befestigungsvorsprungs (6) erstreckt.

7. Kabelbinder nach einem der vorhergehenden Ansprüche, **wobei** die Rückseite (9) senkrecht zur Einsetzrichtung des Befestigungsvorsprungs (6) in die Öffnung (5) ist.

8. Kabelbinder nach einem der vorhergehenden Ansprüche, **wobei** der Streifen (2) mindestens eine Nut (11) zum Einpassen mindestens eines Teils eines Umfangs eines Kabels (3) umfasst, wobei sich die Nut (11) über die gesamte Breite des Streifens (2) erstreckt und auf der zum Kontaktieren der Kabel (3) vorgesehenen Seite des Streifens (2) platziert ist.

9. Kabelbinder nach einem der vorhergehenden Ansprüche, **wobei** der Körper (1) zwei Rippen (12) zum Quetschen von Kabeln (3) umfasst, wobei sich die Rippen (12) innerhalb der Schleife (4) befinden, wenn der Binder um die Kabel (3) zu einer Schleife (4) geschlossen ist und sich beide Rippen (12) entlang des Innenumfangs der Schleife (4) senkrecht zur Richtung der durch die Schleife (4) gebundenen Kabel (3) erstrecken.

10. Kabelbinder nach einem der vorhergehenden Ansprüche, **wobei** der Streifen (2) eine Antirutschstruktur (13), platziert auf der zum Kontaktieren der Kabel (3) vorgesehenen Seite des Streifens (2), umfasst.

11. Kabelbinder nach einem der vorhergehenden Ansprüche, **wobei** jedes Befestigungsvorsprungsteil bei einem Schnitt durch eine Ebene parallel zur Einsetzrichtung des Befestigungsvorsprungs (6) in die Öffnung (5) einen Querschnitt aufweist, wobei der Querschnitt einen ersten Arm, der parallel zur Einsetzrichtung ist, und einen zweiten Arm, der relativ zum ersten Arm um einen spitzen Winkel abgewinkelt ist, aufweist.

12. Kabelbinderanordnung für Fahrzeuge, umfassend eine Komponente für ein Fahrzeug, wobei die Komponente eine Wand (10) mit einer Öffnung (5) umfasst, **dadurch gekennzeichnet, dass** die Anordnung ferner den Kabelbinder nach einem der vorhergehenden Ansprüche umfasst, wobei die Öffnung (5) ein Poka-Yoke-Element (8) zum Eingreifen mit dem Poka-Yoke-Element (8) des Binders umfasst, wenn der Körper (1) des Binders durch den Befestigungsvorsprung (6) in der Öffnung (5) montiert wird.

13. Kabelbinderanordnung nach Anspruch 12, **wobei** die Rückseite (9) parallel zu einer Oberfläche des Körpers (1) ist, an welcher der Befestigungsvorsprung (6) angebracht ist, wobei deren Abstand gleich der Dicke der die Öffnung (5) enthaltenden Wand (10) ist.

14. Fahrzeuglampe, **dadurch gekennzeichnet, dass** sie die Anordnung nach einem der Ansprüche 12 oder 13 umfasst.

## Revendications

1. Dispositif de liaison de câble pour un véhicule, le dispositif de liaison comprenant un corps (1) pour la fixation au véhicule et une bande (2) pour la liaison de câble (3) qui est fixée au corps (1), le dispositif de liaison comprenant en outre un mécanisme de sécurisation pour fermer une partie du dispositif de liaison en formant une boucle (4) autour des câbles (3),
le corps (1) comprenant une protubérance de montage (6) pour insertion dans une ouverture (5) dans une paroi (10) du composant,
la protubérance de montage (6) comprenant un élément poka-yoke (8) pour s'engager avec un élément poka-yoke complémentaire (8) dans l'ouverture du véhicule (5), l'élément poka-yoke (8) de la protubérance de montage (6) comprenant une protubérance et/ou un renfoncement poka-yoke,
la protubérance de montage (6) a une extrémité fixe attachée au corps (1), une extrémité libre pour insertion dans l'ouverture (5) et une section conique (7) adjacente à l'extrémité libre,
la section conique (7) devenant plus étroite en direction de l'extrémité libre et étant délimitée par une surface arrière (9) pour s'appuyer contre la paroi (10) du composant lorsque la protubérance de montage (6) est insérée dans l'ouverture (5), la surface arrière (9) étant décalée par rapport à l'extrémité libre,
une section de la protubérance de montage (6) s'étendant de la surface arrière (9) vers l'extrémité fixe étant plus étroite que la section conique (7) à son extrémité adjacente à la surface arrière (9),
la protubérance de montage (6) comprenant en outre une fente (17) divisant la protubérance de montage (6) en au moins deux protubérances de montage sur au moins une partie de la longueur de la protubérance de montage (6),
**caractérisé en ce que** la protubérance de montage (6) peut être montée dans l'ouverture (5) dans une seule orientation du corps (1) par rapport à l'ouverture (5).

2. Dispositif de liaison de câble selon la revendication 1 **caractérisé en ce que** le dispositif de liaison est constitué d'une matière plastique contenant une charge de verre.

3. Dispositif de liaison de câble selon l'une des revendications précédentes **caractérisé en ce que** le mécanisme de sécurisation est un mécanisme d'attache autobloquante.

4. Dispositif de liaison de câble selon l'une des revendications précédentes **caractérisé en ce que** l'élément poka-yoke (8) sur la protubérance de montage (6) est divisé en au moins deux parties par la fente (17).

5. Dispositif de liaison de câble selon l'une des revendications précédentes **caractérisé en ce que,** vue dans la direction parallèle à la longueur de la protubérance de montage (6), un périmètre extérieur de la section conique (7) forme au moins une partie d'un cercle.

6. Dispositif de liaison de câble selon l'une des revendications précédentes **caractérisé en ce que** la fente (17) s'étend sur toute la longueur de la protubérance de montage (6).

7. Dispositif de liaison de câble selon l'une des revendications précédentes **caractérisé en ce que** la surface arrière (9) est perpendiculaire à la direction d'insertion de la protubérance de montage (6) dans l'ouverture (5).

8. Dispositif de liaison de câble selon l'une des revendications précédentes **caractérisé en ce que** la bande (2) comprend au moins une rainure (11) correspondant au moins à une partie du périmètre d'un câble (3), la rainure (11) s'étendant sur toute la largeur de la bande (2) et étant placée sur le côté de la bande (2) destiné à entrer en contact avec les câbles (3).

9. Dispositif de liaison de câble selon l'une des revendications précédentes **caractérisé en ce que** le corps (1) comprend deux nervures (12) pour serrer les câbles (3), les nervures (12) se trouvant à l'intérieur de la boucle (4) lorsque le dispositif de liaison est fermé en formant une boucle (4) autour des câbles (3) et les deux nervures (12) s'étendant le long du périmètre intérieur de la boucle (4) perpendiculairement à la direction des câbles (3) liés par la boucle (4).

10. Dispositif de liaison de câble selon l'une des revendications précédentes **caractérisé en ce que** la bande (2) comprend une structure antidérapante (13) placée sur le côté de la bande (2) destiné à entrer en contact avec les câbles (3).

11. Dispositif de liaison de câble selon l'une des revendications précédentes **caractérisé en ce que** chaque partie de la protubérance de montage présente une section transversale lorsqu'elle est coupée par un plan parallèle à la direction d'insertion de la protubérance de montage (6) dans l'ouverture (5), la section transversale ayant un premier bras parallèle à la direction d'insertion et un second bras formant un angle aigu avec le premier bras.

12. Ensemble de liaison de câble pour véhicules comprenant un composant pour un véhicule, le composant comprenant une paroi (10) avec une ouverture (5) **caractérisé en ce que** l'ensemble comprend en outre le dispositif de liaison de câble selon l'une des revendications précédentes, l'ouverture (5) comprenant un élément poka-yoke (8) s'engageant avec l'élément poka-yoke (8) du dispositif de liaison lorsque le corps (1) du dispositif de liaison est monté dans l'ouverture (5) avec la protubérance de montage (6).

13. Ensemble de liaison de câble conformément à la revendication 12 **caractérisé en ce que** la surface arrière (9) est parallèle à une surface du corps (1) auquel la protubérance de montage (6) est fixée, leur distance étant égale à l'épaisseur de la paroi (10) contenant l'ouverture (5).

14. Lampe de véhicule **caractérisée en ce qu'**elle comprend l'ensemble selon l'une quelconque des revendications 12 ou 13.
